# EUROPEAN PATENT APPLICATION

(11) **EP 1 367 041 A2**
(43) Date of publication of application: **03.12.2003**
(21) Application number: 03012100.8
(22) Date of filing: 28.05.2003
(51) Int. Cl.: C04B 41/85

(54) **Method of producing decorated ceramic articles**

(30) Priority: 31.05.2002 IT BO20020337
(71) Applicant: Tecno-Europa S.r.l., 41043 Formigine (IT)
(72) Inventor: Elmetti, Valdo, 42014 Castellarano (IT)
(74) Representative: Jorio, Paolo

(57) **Abstract**

A method of producing decorated ceramic articles, and including in succession:
- a step (1) of depositing ceramic material inside a cavity;
- a step (2) of applying a sheet decorated with ceramic material on top of a nonfired semifinished ceramic article;
- a step (4) of pressing the semifinished ceramic article to which the decorated sheet has been applied; and
- a step (5) of firing the pressed semifinished ceramic article.

## Description

The present invention relates to a method of producing decorated ceramic articles.

Ceramic articles are normally decorated industrially using a cylindrical matrix having a number of dead cavities containing the colouring substance, which is transferred to the ceramic article by rolling the matrix on the surface of the article.

The matrix is fitted to a cylindrical structure of appropriate size, and capable of accurately rolling the matrix as required to transfer the decoration from the matrix to the ceramic article.

The disadvantages of the above method are the complexity of the structure to which the matrix is fitted, and the difficulty in changing the decoration.

Another method of decorating ceramic articles is to use sheets of paper or plastic film, on which the decoration, comprising colouring substances of ceramic oxides diluted in oil and dried in UV light, is deposited beforehand. The sheets are deposited by hand on fired ceramic articles, and are covered with a protective layer. Once the protective layer is applied to the sheet, the ceramic article, with the sheet and protective layer on top, is fired again, so that the sheet either burns or is absorbed by the article, leaving the decoration in relief.

While enabling easy decoration change on the production line, the above method has the drawback of the ceramic article being fired twice.

It is an object of the present invention to provide a method of producing decorated ceramic articles, designed to eliminate the drawbacks of the known state of the art.

According to the present invention, there is provided a method of producing decorated ceramic articles, comprising at least one pressing step to press a ceramic assembly comprising a sheet decorated with ceramic materials, and a nonfired semifinished ceramic article; and a subsequent firing step to fire said ceramic assembly.

A preferred embodiment of the method according to the present invention comprises, in succession:
- a deposition step, in which ceramic material is deposited inside a cavity to obtain a nonfired semifinished ceramic article;
- an application step, in which a sheet decorated with ceramic material is applied on top of said nonfired semifinished ceramic article to obtain a ceramic assembly;
- a pressing step, in which the semifinished ceramic article, to which the decorated sheet has been applied, is pressed; and
- a firing step, in which the pressed semifinished ceramic article is fired.

A further preferred embodiment of the method according to the present invention comprises, in succession:
- a deposition step, in which a sheet decorated with ceramic material is deposited inside a cavity;
- an application step, in which ceramic material is applied on top of the decorated sheet to obtain a ceramic assembly;
- a pressing step, in which the semifinished ceramic article is pressed; and
- a firing step, in which the pressed semifinished ceramic article is fired.

In a further preferred embodiment of the method according to the present invention, the step of applying or depositing the decorated sheet is performed by automated means.

The method according to the present invention provides for both easy decoration change and fast, low-cost production. That is, to produce ceramic articles with different decorations, the decorated sheet need simply be changed at the application or deposition step, while production speed is increased and cost reduced by the finished decorated ceramic article being fired only once.

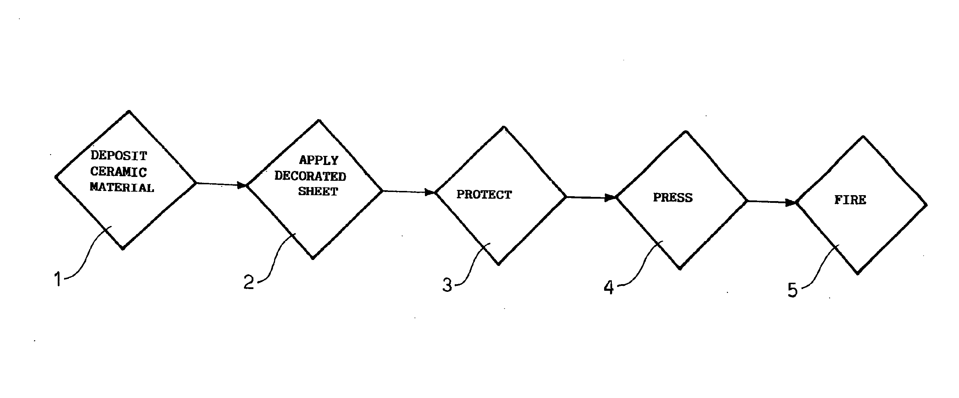

A non-limiting embodiment of the present invention will be described by way of example with reference to the accompanying drawing, which shows a block diagram of the method of decorating ceramic articles according to one embodiment of the present invention.

Number 1 in the accompanying drawing indicates a known ceramic material deposition step, in which ceramic material suitable for producing a body of an article is fed into a cavity. This is normally done by means of a feed carriage moving back and forth between a withdrawn position, in which it receives ceramic material from a hopper, and a forward position, in which it pours the material inside the cavity.

Step 1 is followed by a step 2, in which a sheet decorated with ceramic material is applied to the semifinished article from step 1 to obtain a ceramic assembly. Step 2 is performed by known automated means. Using automated means to apply the sheet is a further advantage of the method according to the invention, by fully automating and further increasing the speed of the production line.

Step 2 of applying the decorated sheet to the semifinished ceramic article is followed by a protection step 3, which is performed by a device known as a "COLOUR DRY PRESS" for covering the sheet with protective material, such as glass grit.

Once the sheet is covered with protective material, the ceramic assembly moves on to the pressing step 4, which is performed by a known ceramic press for forming ceramic articles.

The last step in the method according to the present invention is a firing step 5, in which the ceramic assembly is fired in known manner, and in which the sheet dissolves and is absorbed by the semifinished article, leaving the decoration in relief on the finished ceramic article.

As will be obvious to an expert in this particular field, the method according to the present invention may be modified by inverting the order of steps 1, 2, 3, i.e. the protective layer is first deposited inside the cavity, the sheet decorated with ceramic material is then deposited on top of the protective material inside the cavity, and the ceramic material is deposited on top of the decorated sheet to obtain the ceramic assembly.

The advantages of the method according to the present invention will be clear from the foregoing description, and may be summed up as follows.

The method according to the present invention provides for easily changing the decoration to be applied to the ceramic article; for saving energy, by eliminating the firing step prior to depositing the decorated sheet on the semifinished article; and, if the decorated sheet is deposited on the semifinished article by automated means, for increasing the speed and so greatly increasing output of the production line.

Clearly, changes may be made to the method of producing decorated ceramic articles as described herein without, however, departing from the scope of the accompanying Claims.

## Claims

1. A method of producing decorated ceramic articles, comprising at least one pressing step (4) to press a ceramic assembly comprising a sheet decorated with ceramic materials, and a nonfired semifinished ceramic article; and a subsequent firing step (5) to fire said ceramic assembly.

2. A method as claimed in Claim 1, **characterized by** comprising in succession:
- a deposition step (1), in which ceramic material is deposited inside a cavity to obtain a nonfired semifinished ceramic article;
- an application step (2), in which a sheet decorated with ceramic material is applied on top of said nonfired semifinished ceramic article to obtain a ceramic assembly;
- a pressing step (4), in which the semifinished ceramic article, to which the decorated sheet has been applied, is pressed; and
- a firing step (5), in which the pressed semifinished ceramic article is fired.

3. A method as claimed in Claim 1 or 2, **characterized in that** said application step (2) to apply the decorated sheet is performed by automated means.

4. A method as claimed in any one of the foregoing Claims, **characterized by** comprising a protection step (3), in which the decorated sheet applied to the semifinished article at the application step (2) is . covered with a protective material.

5. A method as claimed in Claim 1, **characterized by** comprising in succession:
- a deposition step, in which a sheet decorated with ceramic material is deposited inside a cavity;
- an application step, in which ceramic material is applied on top of the decorated sheet to obtain a ceramic assembly;
- a pressing step, in which the semifinished ceramic article is pressed; and
- a firing step, in which the pressed semifinished ceramic article is fired.

6. A method as claimed in Claim 5, **characterized in that** said deposition step to deposit the decorated sheet is performed by automated means.

7. A method as claimed in Claim 5 or 6, **characterized by** comprising a protection step, in which a protective material is deposited inside the cavity prior to depositing the decorated sheet.
